# EUROPÄISCHE PATENTSCHRIFT

(11) **EP 1 833 005 B1**
(45) Veröffentlichungstag und Bekanntmachung des Hinweises auf die Patenterteilung: **26.10.2011**
(21) Anmeldenummer: 07012099.3
(22) Anmeldetag: 25.08.2003
(51) Int. Cl.: G06K 17/00, G06F 13/40, H04L 12/40, H04B 3/56

(54) **Detektionssystem und Detektionsverfahren**
Detector system and method for detection
Système de détecteur et procédé de détection

(30) Priorität: 13.09.2002 DE 10242695
(43) Veröffentlichungstag der Anmeldung: 12.09.2007
(62) Teilanmeldung aus: 03019175.3
(73) Patentinhaber: SICK AG, 79183 Waldkirch (DE)
(72) Erfinder: Gehring, Roland, 79215 Elzach-Prechtal (DE); Reichenbach, Jürgen, 79312 Emmendingen (DE); Kilian, Reinhold, 79183 Waldkirch (DE); Uhl, Hubert, 79183 Waldkirch (DE); Wehrle, Klemens, 79183 Waldkirch (DE); Schumacher, Daniel, 79331 Teningen (DE)
(74) Vertreter: Manitz, Finsterwald & Partner GbR

(56) Entgegenhaltungen:
- EP-A- 1 079 322
- EP-A- 1 089 190
- WO-A-98/14853
- WO-A-98/59464
- US-A- 4 627 045

## Beschreibung

Die Erfindung betrifft ein Detektionssystem zur Detektion und Verfolgung von optischen Codes an Objekten, die entlang eines Überwachungsbereichs transportiert werden, sowie ein entsprechendes Detektionsverfahren. Dabei sind mehrere optoelektronische Sensoren vorgesehen, die die Codes einlesen und entsprechende Lesedaten erzeugen. Die Sensoren sind üblicherweise an einen Datenbus angeschlossen, der von einer Bussteuereinheit gesteuert wird. Die von den Sensoren erzeugten Lesedaten werden - beispielsweise nach einer Vorauswertung oder sonstigen Verarbeitungvon der Bussteuereinheit als Ausgabedaten an eine Systemschnittstelle weitergeleitet. Dort können die Ausgabedaten von einer übergeordneten Systemsteuereinheit übernommen werden.

Hintergrund der Erfindung ist beispielsweise die Anwendung eines derartigen Detektionssystems in einer Gepäcksortieranlage. In einer Gepäcksortieranlage werden Gepäckstücke, die beispielsweise mit Barcodes versehen sind, von Transportbändern entlang verschiedener Knotenpunkte und Weichen transportiert. Mittels des Detektionssystems sollen die Barcodes der Gepäckstücke gelesen werden, um den darin verschlüsselten Bestimmungsort des jeweiligen Gepäckstücks zu erfassen. Außerdem soll dabei die Lage des betreffenden Gepäckstücks auf dem Transportband erfasst werden, um beispielsweise eine nachgeschaltete Weiche entsprechend des identifizierten Bestimmungsorts ansteuern zu können.

Das Detektionssystem ist dabei einem Leitrechner der Gepäcksortieranlage untergeordnet und übermittelt diesem die Lesedaten der Sensoren und beispielsweise die momentane Position der betreffenden Gepäckstücke. Der Leitrechner verarbeitet diese Daten für die weitere Steuerung der Weichen oder sonstigen Sortiereinrichtungen der Gepäcksortieranlage.

Problematisch bei derartigen Detektionssystemen und -verfahren ist, dass bereits ein Defekt einer einzigen Komponente des Detektionssystems den Ausfall des gesamten Detektionssystems verursachen und dadurch eine erhebliche Betriebsstörung eines übergeordneten Systems, beispielsweise einer übergeordneten Gepäcksortieranlage bewirken kann.

Aus EP 1 079 322 A1 sind ein Verfahren und eine Vorrichtung zum Identifizieren und zur Positionsbestimmung von Objekten unter Verwendung optischer Sensoren bekannt.

Ein Detektionssystem mit den Merkmalen des Oberbegriffes des Anspruches 1 ist aus EP 1 089 190 A2 bekannt.

Es ist eine Aufgabe der Erfindung, ein Detektionssystem und ein entsprechendes Detektionsverfahren anzugeben, die zumindest bei einem Defekt einer einzigen Komponente (so genannter Ein-Fehler-Fall) die Beibehaltung der prinzipiellen Funktionsfähigkeit der Codedetektion gewährleisten.

Diese Aufgabe wird durch die Merkmale der unabhängigen Ansprüche 1 bzw. 11 gelöst. Unteransprüche sind auf bevorzugte Ausführungsformen gerichtet.

Es sind also zwei separate Datenbusse mit jeweils eigener Steuerung vorgesehen, die beide mit den optoelektronischen Sensoren verbunden sind und somit unabhängig voneinander auf die Lesedaten der Sensoren zugreifen können. Dadurch sind zumindest die Datenbusse und die jeweilige Steuerung redundant ausgelegt. Dies hat zur Folge, dass im Falle eines Defekts einer einzigen Bussteuereinheit oder eines einzigen Datenbusses oder eines Teils hiervon das Detektionssystem funktionsfähig bleibt, ohne Einschränkung seiner Leserate. Im Fall eines derartigen Defekts kann ein Warnsignal erzeugt und ausgegeben werden, so dass die defekte Komponente möglichst umgehend ausgetauscht werden kann, um die vollständige Redundanz des Systems wiederherzustellen.

Die beiden Datenbusse des Detektionssystems sind hinsichtlich der Steuerungsfunktionalität des Detektionssystems nicht gleichwertig. Vielmehr nimmt im Normalfall die dem Primärzweig des Detektionssystems zugeordnete Bussteuereinheit relativ zu der Bussteuereinheit des Sekundärzweigs eine übergeordnete Rolle ein. Die beiden Steuerungen stehen also in einem "Master-Slave"-Verhältnis zueinander ("Master-Funktionalität" der Bussteuereinheit des Primärzweigs).

Im Rahmen dieser Überordnung der Bussteuereinheit des Primärzweigs kann diese beispielsweise Überprüfung der Komponenten des Detektionssystems (mit Ausnahme der Bussteuereinheit des Primärzweigs selbst) durchführen. Die Überordnung des Primärzweigs kann beispielsweise auch darin bestehen, dass lediglich die Bussteuereinheit des Primärzweigs die Verfolgung der Position eines erfassten Codes bzw. eines hiermit versehenen Objekts übernimmt (tracking). Es kann zum Beispiel auch vorgesehen sein, dass allein die Bussteuereinheit des Primärzweigs bestimmt, welche Ausgabedaten an die Systemschnittstelle ausgegeben werden.

Die Zuordnung der Bussteuereinheiten zu der primären bzw. sekundären Funktionalität kann bei Beginn des Betriebs des Detektionssystems beliebig festgelegt sein, beispielsweise über ein jeweiliges Datenbit in einem nichtflüchtigen Speicher der Bussteuereinheiten. Lediglich im Falle eines Defekts einer Komponente des Primärzweigs des Detektionssystems übernimmt die Bussteuereinheit des Sekundärzweigs mit dem zugeordneten Datenbus die Master-Funktionalität, so dass die Zuordnung zu dem Primärzweig und dem Sekundärzweig letztlich vertauscht wird ("fall back"-Strategie). Der ursprüngliche Sekundärzweig dient also als Ersatz für den Fall, dass eine Komponente des Primärzweigs ausfällt.

Bei fehlerfreiem Betrieb des Detektionssystems funktionieren die Bussteuereinheiten und die Datenbusse jedoch im Wesentlichen genauso wie bei einem Detektionssystem ohne Sekundärzweig, d.h. wie bei einem Detektionssystem mit einer einzigen Bussteuereinheit und einem einzigen Datenbus. Dadurch ist die zusätzliche Belastung der Datenbusse trotz der redundanten Ausführung des Detektionssystems sehr gering, so dass auch ein Echtzeitbetrieb des Detektionssystems leicht realisiert werden kann.

Vor allem verursacht die redundante Auslegung des Detektionssystems keine höhere Belastung der übergeordneten Systemsteuereinheit, insbesondere keine erhöhte Menge von Ausgabedaten und keine inkonsistente Ausgabedaten. Die Ausgabedaten können nämlich innerhalb eines einzigen Zweigs des Detektionssystems festgelegt werden, so dass die übergeordnete Systemsteuereinheit nicht mit widersprüchlichen Datensätzen aus den beiden Zweigen des Detektionssystems belastet wird. Mit anderen Worten wird vermieden, dass innerhalb der übergeordneten Systemsteuereinheit zwei möglicherweise unterschiedliche Datensätze der beiden Zweige ausgewertet werden müssen, um zu entscheiden, welcher der beiden Datensätze überhaupt weiterverarbeitet wird. Auch wird die übergeordnete Systemsteuereinheit nicht damit belastet, anhand zweier inkonsistenter Datensätze des Detektionssystems entscheiden zu müssen, ob eine Komponente des Detektionssystems defekt ist. Eine Vereinheitlichung der Ausgabedaten und eine Überprüfung des Detektionssystems auf mögliche Defekte kann stattdessen innerhalb des Primärzweigs durchgeführt werden.

Gemäß einer vorteilhaften Ausführungsform führt die Bussteuereinheit des Primärzweigs regelmäßig eine Überprüfung durch, ob einer der Datenbusse des Detektionssystems defekt ist. Vorzugsweise führt parallel hierzu auch die Bussteuereinheit des Sekundärzweigs eine derartige regelmäßige Überprüfung durch.

Falls dabei ein Defekt desjenigen Datenbusses ermittelt wird, der ursprünglich dem Primärzweig des Detektionssystems zugeordnet war, so veranlasst die Bussteuereinheit des Primärzweigs oder die Bussteuereinheit des Sekundärzweigs eine Vertauschung der Zuordnung der Datenbusse und der Bussteuereinheiten zu dem Primärzweig und dem Sekundärzweig. Mit anderen Worten wird dann die Master-Funktionalität von dem einen Zweig auf den anderen Zweig übertragen.

Dabei ist es von Vorteil, wenn die Bussteuereinheit des Primärzweigs oder des Sekundärzweigs ein Warnsignal erzeugt, falls die erläuterte Überprüfung der Datenbusse ergibt, dass innerhalb des Datenbusses des Sekundärzweigs ein Defekt vorliegt. In diesem Fall schränkt der Defekt die Leserate des Detektionssystems nämlich noch nicht ein. Aufgrund des Warnsignals kann jedoch umgehend für eine Wiederherstellung der Funktionsfähigkeit des defekten Datenbusses gesorgt werden, so dass der Sekundärzweig möglichst bald wieder uneingeschränkt als Ersatz zur Verfügung steht.

Gemäß einer weiteren vorteilhaften Ausführungsform besitzt jede der beiden Bussteuereinheiten eine Überwachungsschaltung, durch die regelmäßig überprüft werden kann, ob die jeweils andere Bussteuereinheit defekt ist. Durch diese Überwachungsschaltungen ist also gewährleistet, dass ein möglicher Defekt einer Bussteuereinheit möglichst umgehend erkannt wird. Falls diese Überprüfungen einen Defekt der Bussteuereinheit des Primärzweigs ergeben, löst die Bussteuereinheit des Sekundärzweigs eine Vertauschung der erläuterten Unterteilung in Primärzweig und Sekundärzweig aus. In diesem Fall wird also die Master-Funktionalität von der defekten Bussteuereinheit des Primärzweigs auf die Bussteuereinheit des Sekundärzweigs übertragen.

Somit gewährleistet die genannte Überwachungsschaltung, dass auch im Falle eines Defekts einer Bussteuereinheit die Funktionsfähigkeit des Detektionssystems erhalten bleibt. Diese Überwachungsschaltung muss nicht als separate Baueinheit realisiert sein, sondern kann als Teil der Steuerungs-Software innerhalb der Bussteuereinheiten verwirklicht sein.

Weiterhin ist es von Vorteil, wenn die beiden genannten Datenbusse als CAN-Busse (Controller Area Network) ausgebildet sind. Von der Vielzahl der möglichen und verfügbaren Bussysteme bietet nämlich das CAN-Bussystem für die erläuterte Verschaltung innerhalb des erfindungsgemäßen Detektionssystems ein besonders gutes Echtzeitverhalten mit kurzen Reaktionszeiten, sowie die erforderlichen Sicherheitsmechanismen. Insbesondere begünstigt das CAN-Bussystem eine Fortführung des Betriebs des Detektionssystems mit allenfalls geringen Datenverlusten, selbst wenn einzelne Komponenten der verschiedenen Zweige des Detektionssystems ausfallen.

Gemäß einer weiteren vorteilhaften Ausführungsform ist jeweils einer der mehreren optoelektronischen Sensoren als ein Gateway-Sensor konfiguriert, der den Datenbus des Primärzweigs mit dem Datenbus des Sekundärzweigs verbindet. Dieser Gateway-Sensor ermöglicht also eine Datenkommunikation zwischen den beiden - an sich getrennten - Datenbussen. Dadurch können Daten auch zwischen den beiden Datenbussen ausgetauscht werden, ohne dass eine zusätzliche physische Verbindung erforderlich ist.

Vorzugsweise sind alle verwendeten Sensoren dergestalt ausgebildet, dass sie wahlweise als Gateway-Sensor eingesetzt werden können. In diesem Fall ist die Festlegung des Gateway-Sensors also variabel und wird beispielsweise von der Bussteuereinheit des Primärzweigs vorgegeben.

Ferner ist es bevorzugt, wenn eine regelmäßige Überprüfung durchgeführt wird, ob der aktuell festgelegte Gateway-Sensor noch funktionsfähig ist, um im Falle eines Defekts einen anderen Sensor als Gateway-Sensor festzulegen.

Erfindungsgemäß besitzt das Detektionssystem zumindest zwei Auslöseeinrichtungen, die zum Erfassen eines in Richtung des Überwachungsbereichs transportierten Objekts dienen und entsprechende Objekterfassungssignale erzeugen. Bei diesen Auslöseeinrichtungen kann es sich beispielsweise um Lichtschranken oder sonstige optoelektronische Sensoren oder Näherungssensoren handeln. Die hiervon erzeugten Objekterfassungssignale dienen dazu, die nachfolgend gelesenen Codes einem bestimmten Objekt zuordnen zu können und die Transportbewegung dieses Objekts verfolgen zu können.

Es ist vorgesehen, dass jede der beiden genannten Auslöseseinrichtungen sowohl mit der Bussteuereinheit des Primärzweigs als auch mit der Bussteuereinheit des Sekundärzweigs verbunden ist. Dadurch ist eine vollständige Redundanz gewährleistet, so dass bei einem Defekt einer einzigen Auslöseeinrichtung stets noch ein Objekterfassungssignal erzeugt und verarbeitet werden kann, gleichgültig welche Bussteuereinheit gerade dem Primärzweig zugeordnet ist.

Vorzugsweise sind die Bussteuereinheiten dergestalt konfiguriert, dass die Objekterfassungssignale der beiden Auslöseeinrichtungen miteinander verknüpft werden, um einen möglichen Defekt einer der beiden Auslöseeinrichtungen erkennen zu können. Insbesondere kann überprüft werden, ob innerhalb eines Zeitintervalls vor oder nach der Erzeugung eines Objekterfassungssignals durch die eine Auslöseeinrichtung auch ein Objekterfassungssignal von der anderen Auslöseeinrichtung erzeugt wird.

Hinsichtlich der Auslöseeinrichtungen kann das Risiko bestehen, dass eine Auslöseeinrichtung zwar noch Objekterfassungssignale erzeugt, diese jedoch nicht der korrekten momentanen Position des erfassten Objekts entsprechen. Beispielsweise kann die Gefahr bestehen, dass ein Objekt, das von einem Transportband in Richtung des Überwachungsbereichs geführt wird, an einer Sende-/Empfangseinheit oder an einem Reflektor anstößt, wodurch die hierdurch gebildete Lichtschranke versetzt oder verschwenkt wird. In diesem Fall würde ein von dieser Lichtschranke erzeugtes Objekterfassungssignal nicht mehr dem ursprünglichen Abstand der Lichtschranke zu dem Überwachungsbereich entsprechen, was zu fehlerhaften Zuordnungen zwischen eingelesenen Codes und erfassten Objekten führen könnte.

Diese Gefahr kann jedoch dadurch beseitigt werden, dass der Reflektor und/oder die Sende-/Empfangseinheit einer derartigen Lichtschranke mit einer Lochblende versehen wird. Dadurch funktioniert diese Lichtschranke nur noch bei exakter Ausrichtung der Sende-/Empfangseinheit und des Reflektors zueinander. Im Falle einer unkontrollierten Lageänderung der Sende-/ Empfangseinheit oder des Reflektors dagegen wird kein Objekterfassungssignal mehr erzeugt, so dass diese Lichtschranke letztlich als defekt identifiziert wird und nicht versehentlich falsche Objekterfassungssignale ausgibt.

Gemäß einer weiteren vorteilhaften Ausführungsform besitzt das Detektionssystem zumindest zwei Inkrementalgeber, durch die die Transportgeschwindigkeit der Codes bzw. der hiermit versehenen Objekte erfasst wird, und die entsprechende Inkrementsignale erzeugen. Diese Inkrementsignale ermöglichen also die räumliche Verfolgung und Zuordnung eines erfassten Objekts und gestatten dadurch auch die Zuordnung eines eingelesenen Codes zu dem betreffenden Objekt.

Es ist vorgesehen, dass jeder dieser beiden Inkrementalgeber sowohl mit der Bussteuereinheit des Primärzweigs als auch mit der Bussteuereinheit des Sekundärzweigs verbunden ist. Dadurch wird hinsichtlich der Inkrementalgeber eine vollständige Redundanz geschaffen, so dass bei einem Defekt eines einzigen Inkrementalgebers stets noch ein Inkrementsignal erzeugt und an die Bussteuereinheit des Primärzweigs weitergeleitet wird, gleichgültig welche Bussteuereinheit gerade dem Primärzweig zugeordnet ist.

Gemäß einer bevorzugten Weiterbildung erfolgt eine ständige Überwachung, ob beide Inkrementalgeber noch fehlerfrei funktionieren. Hierfür können die Bussteuereinheiten jeweils einen Zähler aufweisen, wobei der Zähler durch die Inkrementsignale des einen Inkrementalgebers inkrementiert und durch die Inkrementsignale des anderen Inkrementalgebers dekrementiert wird. Eine Überwachungsschaltung überprüft, ob der Zähler innerhalb regelmäßiger Zeitintervalle einen vorgegebenen Schwellwert unterschreitet oder überschreitet. Das Unterschreiten des Schwellwerts kann somit als ein Defekt des den Zähler inkrementierenden Inkrementalgebers gewertet werden, während das Überschreiten des Schwellwerts als ein Defekt des den Zähler dekrementierenden Inkrementalgebers gilt.

Diese Art der Überwachung der Inkrementalgeber auf deren Funktionsfähigkeit hat den Vorteil, dass nur sehr einfache Operationen durchgeführt werden müssen (Inkrementieren, Dekrementieren, Schwellwertvergleich). Dadurch werden die Bussteuereinheiten minimal belastet.

Der genannte Zähler und die genannte Überwachungsschaltung müssen auch nicht als separate Baueinheiten realisiert sein, sondern sie können als Teil der Steuerungs-Software der Bussteuereinheiten verwirklicht sein.

Gemäß einer weiteren vorteilhaften Ausführungsform sind wenigstens zwei Energieversorgungseinheiten vorgesehen, wobei jeder der mehreren optoelektronischen Sensoren sowohl an die eine Energieversorgungseinheit als auch an die andere Energieversorgungseinheit angeschlossen ist. Dadurch ist gewährleistet, dass auch im Fall eines Defekts einer Energieversorgungseinheit die Sensoren weiterhin funktionsfähig sind.

Zu der Erfindung ist schließlich noch anzumerken, dass die genannten zusätzlichen Funktionen der Bussteuereinheiten, die über die reine Steuerung der Datenbusse hinausgehen, selbstverständlich auch von separaten Steuer- und Auswerteeinheiten übernommen werden können. Beispielsweise kann eine erste Auswertung und Verarbeitung der Lesedaten der Sensoren auch innerhalb eigener Baueinheiten - und nicht in den Bussteuereinheiten - durchgeführt werden.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1: Ein Blockdiagramm eines Detektionssystems,
- Fig. 2: Eine schematische Perspektivansicht von Teilen des Detektionssystems gemäß Fig. 1
- Fig. 3 und 4: jeweils eine schematische Draufsicht auf zwei Auslöseeinrichtungen,
- Fig. 5: eine schematische Darstellung der Überwachung von zwei Inkrementalgebern auf deren Funktionsfähigkeit, und
- Fig. 6: ein Schaltbild einer Kurzschluss-Sicherungsschaltung.

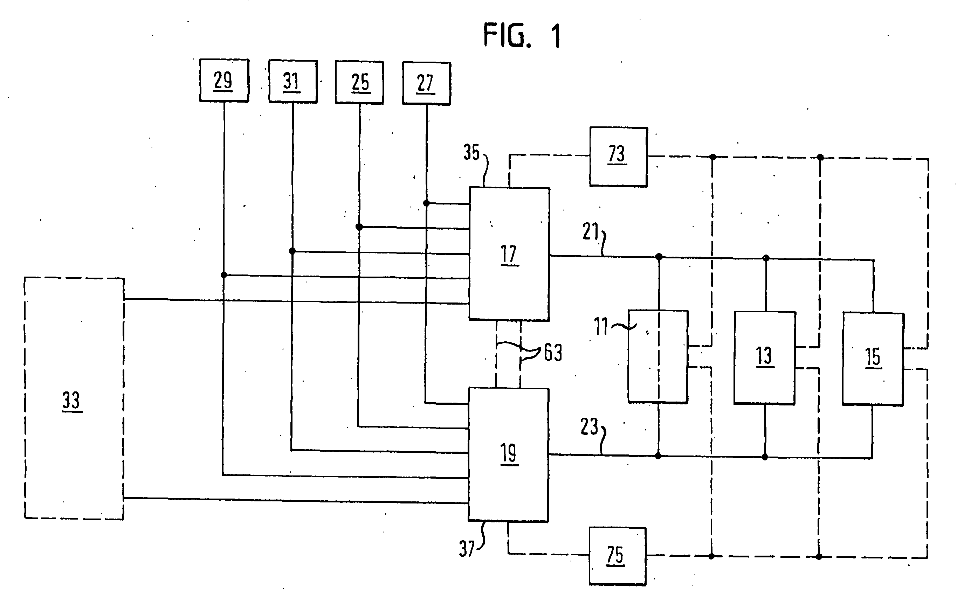

Fig. 1 zeigt ein Blockdiagramm eines erfindungsgemäßen Detektionssystems, das beispielsweise Teil einer Gepäcksortieranlage ist. Diese Gepäcksortieranlage besitzt außerdem Transportbänder (in Fig. 1 nicht gezeigt), auf denen Gepäckstücke transportiert werden, die mit individuellen Barcodes versehen sind. Diese Barcodes kennzeichnen den jeweiligen Bestimmungsort der Gepäckstücke. Das gezeigte Detektionssystem hat die Aufgabe, zum einen die auf den Gepäckstücken angebrachten Codes zu lesen und zum anderen den jeweils gelesenen Code mit einer Position des betreffenden Gepäckstücks auf dem Transportband zu identifizieren.

Zu diesem Zweck besitzt das Detektionssystem mehrere, beispielsweise vierzehn oder eine andere Anzahl von optoelektronischen Sensoren, von denen in Fig. 1 beispielhaft die drei Sensoren 11, 13, 15 gezeigt sind. Diese sind durch unterschiedlich positionierte Barcodescanner gebildet, die an sich bekannt sind.

Das Detektionssystem gemäß Fig. 1 besitzt ferner zwei Bussteuereinheiten 17, 19, die im Zusammenhang mit bekannten Detektionssystemen als OTC's (Omni Tracker Controller) bekannt sind. Jede Bussteuereinheit 17, 19 ist über einen jeweiligen Datenbus 21, 23 mit jedem Sensor 11, 13, 15 verbunden. Die Datenbusse 21, 23 sind durch separate Verkabelungen gebildet.

Ferner sind zwei Lichtschranken 25, 27 gezeigt, die an dem genannten Transportband angeordnet sind und als Auslöseeinrichtungen zum Erzeugen von Objekterfassungssignalen dienen, wie nachfolgend noch erläutert wird. Jede Lichtschranke 25, 27 ist direkt mit beiden Bussteuereinheiten 17, 19 verbunden.

Außerdem sind in Fig. 1 zwei Inkrementalgeber 29, 31 gezeigt, die ebenfalls an dem genannten, in Fig. 1 nicht gezeigten Transportband der Gepäcksortieranlage angeordnet sind und letztlich zur Verfolgung der Transportbewegungen der erfassten Objekte dienen, wie nachfolgend noch erläutert wird. Jeder Inkrementalgeber 29, 31 ist direkt mit beiden Bussteuereinheiten 17, 19 verbunden.

Weiterhin sind in Fig. 1 zwei Energieversorgungseinheiten 73, 75 gezeigt, die jeweils mit einer Bussteuereinheit 17 bzw. 19 und die beide mit jedem Sensor 11, 13, 15 verbunden sind.

Schließlich ist in Fig. 1 auch ein Leitrechner 33 der Gepäcksortieranlage gezeigt, der nicht Teil des erfindungsgemäßen Detektionssystems ist, sondern eine den beiden Bussteuereinheiten 17, 19 übergeordnete Systemsteuereinheit bildet. Der Leitrechner 33 ist mit den beiden Bussteuereinheiten 17, 19 über eine jeweilige Systemschnittstelle 35, 37 verbunden.

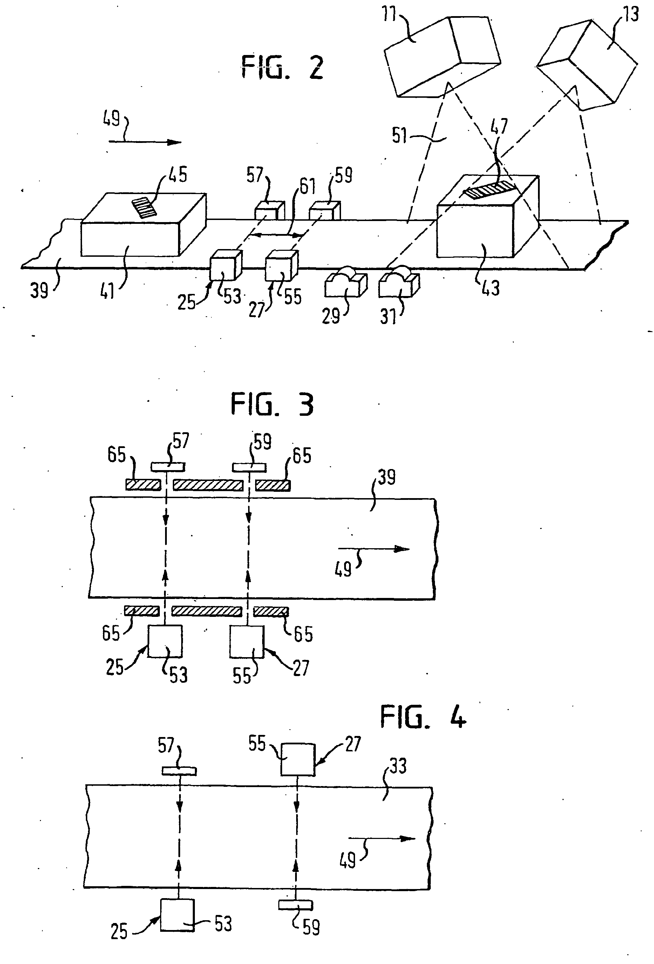

Fig. 2 zeigt schematisch die Anordnung einiger Komponenten des Detektionssystems gemäß Fig. 1 an einem Transportband 39 der genannten Gepäcksortieranlage. Auf dem Transportband 39 befinden sich zwei Gepäckstücke 41, 43, die jeweils mit einem Barcode 45, 47 versehen sind. Die Gepäckstücke 41, 43 werden mittels des Transportbands 39 entlang einer Transportrichtung 49 bewegt. Gezeigt sind die beiden Sensoren 11, 13, die in unterschiedlicher Winkelstellung oberhalb des Transportbands 39 angeordnet sind. Beide Sensoren 11, 13 tasten mittels eines fächerförmig geführten Sendelichtstrahls einen Überwachungsbereich 51 ab und vermögen dadurch einen Barcode 47 eines durch den Überwachungsbereich 51 geführten Gepäckstücks 43 einzulesen.

In Fig. 2 sind ferner die beiden Lichtschranken 25, 27 gezeigt, die jeweils eine Sende-/Empfangseinheit 53 bzw. 55 sowie einen Reflektor 57 bzw. 59 aufweisen. Die beiden Lichtschranken 25, 27 sind bezüglich der Transportrichtung 49 um einen Zwischenabstand 61 voneinander beabstandet angeordnet, so dass die Lichtschranke 25 bezüglich der Transportrichtung 49 der Lichtschranke 27 vorgeschaltet ist.

In Fig. 2 sind außerdem die beiden Inkrementalgeber 29, 31 gezeigt, die die Bewegung des Transportbands 39 erfassen und ständig Inkrementsignale erzeugen, deren Frequenz der Geschwindigkeit des Transportbands 39 entspricht.

Wie bereits erläutert, dient das in Fig. 1 und 2 gezeigte Detektionssystem dazu, die Barcodes 45, 47 der durch den Überwachungsbereich 51 transportierten Gepäckstücke 41, 43 einzulesen, diese Barcodes 45, 47 den Gepäckstücken 41, 43 zuzuordnen und über die Systemschnittstellen 35, 37 entsprechende Ausgabedaten an den Leitrechner 33 weiterzuleiten. Der Leitrechner 33 kann dann in Reaktion auf diese Ausgabedaten beispielsweise eine Weiche zeitgenau umstellen, die dem Detektionssystem bezüglich der Transportrichtung 49 nachgeschaltet ist, so dass das betreffende Gepäckstück 41 oder 43 auf ein bestimmtes weiteres Transportband und somit an den erwünschten Bestimmungsort gelangt.

Das Detektionssystem gemäß Fig. 1 und 2 funktioniert prinzipiell wie folgt:
Eine Bussteuereinheit 17, 19 erfasst aufgrund der Objekterfassungssignale der Lichtschranken 25, 27 zunächst den bevorstehenden Eintritt eines Gepäckstücks 41, 43 in den Überwachungsbereich 51. Die Position des betreffenden Gepäckstücks 41, 43 zum Zeitpunkt des Durchlaufens der Lichtschranken 25, 27 ist somit bekannt, und diese Position kann auch bei weiterer Transportbewegung des Gepäckstücks 41 bzw. 43 verfolgt werden. Hierfür berücksichtigt die betreffende Bussteuereinheit 17, 19 die Inkrementsignale der Inkrementalgeber 29, 31, die jeweils einer vorbestimmten Transportdistanz des Transportbands 39 und somit der Gepäckstücke 41, 43 entsprechen.

Wenn nachfolgend die Sensoren 11, 13, 15 einen Barcode 45, 47 einlesen und die entsprechenden Lesedaten über den jeweiligen Datenbus 21, 23 an die Bussteuereinheiten 17, 19 weiterleiten, können diese die Lesedaten eindeutig dem jeweiligen Gepäckstück 41, 43 zuordnen, da deren Lage auf dem Transportband 39 und somit innerhalb des Überwachungsbereichs 51 bekannt ist. Die somit verknüpften Lesedaten und Positionsangaben können dann an die Systemschnittstellen 35, 37 weitergeleitet werden.

Eine Besonderheit des Detektionssystems gemäß Fig. 1 und 2 besteht darin, dass zwei separate Datenbusse 21, 23 vorgesehen sind, denen jeweils eine eigene Bussteuereinheit 17 bzw. 19 zugeordnet ist, wobei jeder der beiden Datenbusse 21, 23 mit allen Sensoren 11, 13, 15 verbunden ist. Somit können die Lesedaten aller Sensoren 11, 13, 15 unabhängig voneinander an die Bussteuereinheit 17 und an die Bussteuereinheit 19 übermittelt werden. Dadurch ist im Falle eines Defekts eines der beiden Datenbusse 21, 23 oder einer der beiden Bussteuereinheiten 17, 19 gewährleistet, dass weiterhin sämtliche Lesedaten ermittelt und sämtliche Ausgabedaten an eine Systemschnittstelle 35, 37 weitergeleitet werden können.

Eine weitere Besonderheit des Detektionssystems gemäß Fig. 1 und 2 besteht darin, dass die Bussteuereinheiten 17, 19 und die Datenbusse 21, 23 zu unterschiedlichen Wertigkeiten konfiguriert sind. Hierfür ist beispielsweise festgelegt, dass der Datenbus 21 und die zugeordnete Bussteuereinheit 17 einem Primärzweig zugeordnet sind und der Datenbus 23 und die entsprechende Bussteuereinheit 19 einem Sekundärzweig zugeordnet sind, wobei dieser Sekundärzweig hinsichtlich der Steuerung des gezeigten Detektionssystems dem genannten Primärzweig untergeordnet ist. Dadurch kann das Detektionssystem betrieben werden, wie vorstehend bereits prinzipiell erläutert, wobei jedoch die Bussteuereinheit 17 des Primärzweigs eine übergeordnete Steuerungsfunktionalität besitzt.

Dies bedeutet, dass zwar beide Bussteuereinheiten 17, 19 die Lesedaten von dem jeweiligen Datenbus 21 bzw. 23 erhalten und diese Lesedaten mit den Objekterfassungssignalen der Lichtschranken 25, 27 sowie den Inkrementsignalen der Inkrementalgeber 29, 31 verknüpfen können. Allerdings sorgt die Bussteuereinheit 17 des Primärzweigs dafür, dass über die Systemschnittstellen 35, 37 stets einheitliche Ausgabedaten an den Leitrechner 33 weitergeleitet werden, so dass von den beiden Bussteuereinheiten 17, 19 zu keinem Zeitpunkt unterschiedliche Ausgabedaten ausgegeben werden.

Dies hat den Vorteil, dass stets konsistente Ausgabedaten an beiden Systemschnittstellen 35, 37 ausgegeben werden, so dass innerhalb des übergeordneten Leitrechners 33 keine Bewertung unterschiedlicher Datensätze erforderlich ist. Auch muss innerhalb des Leitrechners 33 keine Auswertung der an den beiden Systemschnittstellen 35, 37 anliegenden Ausgabedaten hinsichtlich möglicher Defekte des Detektionssystems durchgeführt werden. Der Leitrechner 33 wird somit von dem Detektionssystem nur gering belastet, und die Integration des Detektionssystems in die Gepäcksortieranlage bzw. in das Steuerungsprotokoll des Leitrechners 33 ist besonders einfach.

Das gezeigte Detektionssystem funktioniert bei fehlerfreiem Betrieb also letztlich wie ein Detektionssystem ohne den Datenbus 23 und die Bussteuereinheit 19 des Sekundärzweigs. Lediglich in dem Fall, dass der Datenbus 21, die Bussteuereinheit 17 oder eine sonstige Komponente des Primärzweigs defekt wird, wird die erläuterte Zuordnung zu dem Primärzweig bzw. dem Sekundärzweig vertauscht, so dass in dem beschriebenen Beispiel die Bussteuereinheit 19 die übergeordnete Steuerungsfunktionalität übernimmt und somit - gemeinsam mit dem Datenbus 23 - dem Primärzweig zugeordnet ist.

Um zu gewährleisten, dass an den beiden Systemschnittstellen 35, 37 stets dieselben Ausgabedaten anliegen, wie erläutert, ist es beispielsweise möglich, dass die aktuell dem Primärzweig zugeordnete Bussteuereinheit 17, 19 die Ausgabedaten in den Sekundärzweig spiegelt. Mit anderen Worten überschreibt die Bussteuereinheit 17, 19 des Primärzweigs die in der Bussteuereinheit 19 bzw. 17 des Sekundärzweigs ermittelten Daten, bevor diese Daten an die Systemschnittstellen 35, 37 geleitet werden und nachdem alle vorgesehenen Überprüfungen ergeben, dass innerhalb des Primärzweigs kein Defekt vorliegt.

Alternativ hierzu ist es jedoch auch möglich, dass lediglich eine einzige Systemschnittstelle vorgesehen ist, an der stets die Ausgabedaten der Bussteuereinheit 17 bzw. 19 des Primärzweigs ausgegeben werden.

Eine weitere Besonderheit des Detektionssystems gemäß Fig. 1 und 2 besteht darin, dass die beiden Datenbusse 21, 23 als voneinander unabhängig ausgebildete CAN-Busse vorgesehen sind.

Außerdem ist der optoelektronische Sensor 11 als ein Gateway-Sensor konfiguriert. Dadurch bildet dieser Sensor 11 eine Verbindung zwischen dem Datenbus 21 und dem Datenbus 23, wie in Fig. 1 durch die gestrichelte Linie angezeigt ist. Der Sensor 11 ermöglicht somit eine Kommunikation zwischen den Datenbussen 21, 23 und somit zwischen den Bussteuereinheiten 17, 19, ohne dass hierfür eine zusätzliche physische Verbindung erforderlich ist. Dadurch wird beispielsweise ermöglicht, dass die Ausgabedaten von der Bussteuereinheit 17 des Primärzweigs in die Bussteuereinheit 19 des Sekundärzweigs überschrieben werden, wie vorstehend erläutert, oder dass die Bussteuereinheiten 17, 19 sich gegenseitig überwachen, wie nachstehend noch erläutert wird.

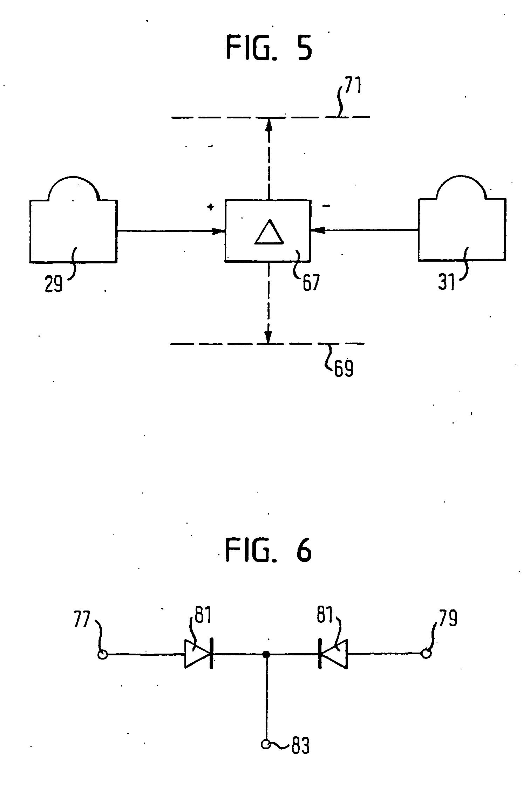

Folgende zusätzliche Funktionalitäten sind bei dem Detektionssystem gemäß Fig. 1 und 2 möglich, wobei diese Funktionalitäten unabhängig voneinander verwirklicht werden können und wobei eine Kombination mehrerer dieser Funktionalitäten die Redundanz des Detektionssystems und somit dessen Ausfallsicherheit erhöht:
(a) Die Bussteuereinheit 17 des Primärzweigs und/oder die Bussteuereinheit 19 des Sekundärzweigs überprüft regelmäßig, ob einer der Datenbusse 21, 23 defekt ist. Falls ein Defekt des Datenbusses 21 des Primärzweigs festgestellt wird, so löst die betreffende Bussteuereinheit 17 bzw. 19 eine Vertauschung der erläuterten Zuordnung zu dem Primärzweig bzw. dem Sekundärzweig aus. Mit anderen Worten verständigen die beiden Bussteuereinheiten 17, 19 sich in diesem Fall derart, dass die Master-Funktionalität von der einen Bussteuereinheit 17 auf die andere Bussteuereinheit 19 übergeben wird.
   Falls dagegen ein Defekt des Datenbusses 23 des Sekundärzweigs identifiziert wird, so erzeugt die betreffende Bussteuereinheit 17 bzw. 19 ein Warnsignal, so dass dieser Defekt möglichst umgehend behoben werden kann. Dieses Warnsignal kann an einer eigenen optischen oder akustischen Signalausgabe des Detektionssystems ausgegeben werden (in Fig. 1 und 2 nicht gezeigt) und/oder über die Systemschnittstellen 35, 37 an den Leitrechner 33 weitergeleitet werden.
   Die erläuterte Überprüfung der Datenbusse 21, 23 auf einen möglichen Defekt kann beispielsweise auf Grundlage eines Vergleichs durchgeführt werden, ob über den einen Datenbus 21 Lesedaten oder sonstige Signaldaten der Sensoren 11, 13, 15 von derselben Anzahl von Sensoren 11, 13, 15 empfangen werden wie über den anderen Datenbus 23. Im Falle einer unterschiedlichen Anzahl wird angenommen, dass derjenige Datenbus 21 oder 23 mit der geringeren Anzahl von verfügbaren Datensätzen defekt ist.
   Für diesen Vergleich kann eine Vergleichsschaltung als separate Baueinheit vorgesehen sein; vorzugsweise wird der Vergleich jedoch von der Steuerungs-Software der betreffenden Bussteuereinheit 17, 19 durchgeführt.
(b) Die beiden Bussteuereinheiten 17, 19 kommunizieren regelmäßig miteinander, um zu überprüfen, ob die jeweils andere Bussteuereinheit 19 bzw. 17 defekt ist.
   Falls eine derartige Überprüfung einen Defekt der Bussteuereinheit 17 des Primärzweigs ergibt, so löst die Bussteuereinheit 19 des Sekundärzweigs eine Vertauschung der erläuterten Zuordnung zu dem Primärzweig und dem Sekundärzweig aus, so dass also diese Bussteuereinheit 19 nun die Master-Funktionalität übernimmt.
   Falls dagegen die Bussteuereinheit 17 des Primärzweigs einen Defekt der Bussteuereinheit 19 des Sekundärzweigs feststellt, so erzeugt sie innerhalb des Detektionssystems und/oder an den Systemschnittstellen 35, 37 ein Warnsignal, so dass die defekte Bussteuereinheit 19 möglichst bald ausgetauscht werden kann. In diesem Fall wird die erläuterte Zuordnung zu dem Primärzweig und dem Sekundärzweig beibehalten, und es tritt kein Datenverlust aufgrund des Ausfalls der Bussteuereinheit 19 auf.
   Die gegenseitige Überwachung der Bussteuereinheiten 17, 19 kann beispielsweise dadurch erfolgen, dass jede Bussteuereinheit 17, 19 jeweils mittels eines Kontrollsignalgenerators regelmäßig ein Kontrollsignal erzeugt, das an die jeweils andere Bussteuereinheit 19 bzw. 17 übermittelt wird. Außerdem kann jede Bussteuereinheit 17, 19 eine Empfangsüberwachungsschaltung besitzen, um regelmäßig zu überprüfen, ob von der jeweils anderen Bussteuereinheit 19 bzw. 17 das genannte Kontrollsignal empfangen wird. Dieser Empfang muss innerhalb eines vorbestimmten Zeitintervalls erfolgen (Herunterzählen eines so genannten "watchdog timer"); ansonsten wird von einem Defekt der jeweils anderen Bussteuereinheit 19 bzw. 17 ausgegangen.
   Der genannte Kontrollsignalgenerator und die Empfangsüberwachungsschaltung müssen nicht als separate Baueinheiten realisiert sein, sondern sie können stattdessen als Teil der Steuerungs-Software der Bussteuereinheiten 17, 19 realisiert sein.
   Die für die erläuterte Überprüfung erforderliche Kommunikation zwischen den beiden Bussteuereinheiten 17, 19 erfolgt entweder im Rahmen der Datenbuskommunikation über den erläuterten Gateway-Sensor 11 (so genanntes "heartbeat"-Telegramm innerhalb des Busprotokolls). Oder die beiden Bussteuereinheiten 17, 19 sind über spezielle Direktverbindungsleitungen 63 miteinander verbunden, so dass eine direkte Kommunikation möglich ist ("ping"-Signal).
   Die Kommunikation zwischen den Bussteuereinheiten 17, 19 über den Gateway-Sensor 11 hat den Vorteil, dass keine zusätzliche Direktverbindungsleitung 63 erforderlich ist. Die Direktverbindungsleitungen 63 haben demgegenüber den Vorteil, dass die Datenbusse 21, 23 nicht ständig mit dem "heartbeat"-Telegramm der Bussteuereinheiten 17, 19 belastet werden, so dass in diesem Fall besonders kurze Reaktionszeiten ("watchdog"-Zeiten) möglich sind.
   Es ist von besonderem Vorteil, wenn die gegenseitige Überwachung der Bussteuereinheiten 17, 19 sowohl über ein "heartbeat"-Telegramm als auch über eine Direktverbindungsleitung 63 erfolgt, da in diesem Fall eine zusätzliche Redundanz geschaffen wird. Falls nämlich das "heartbeat"-Telegramm über die Datenbusse 21, 23 nicht empfangen wird und dennoch rechtzeitig ein Kontrollsignal über die Direktverbindungsleitungen 63 erhalten wird, kann beispielsweise ausgeschlossen werden, dass ein Defekt des Gateway-Sensors 11 oder eines Datenbusses 21, 23 fälschlicherweise für einen Defekt der jeweils anderen Bussteuereinheit 19 bzw. 17 gehalten wird.
(c) Die Bussteuereinheit 17 des Primärzweigs kann regelmäßig überprüfen, ob einer der optoelektronischen Sensoren defekt ist, um zutreffendenfalls ein Warnsignal zu erzeugen und dieses innerhalb des Detektionssystems anzuzeigen oder an den Leitrechner 33 weiterzuleiten. Dadurch kann der defekte Sensor möglichst umgehend ausgetauscht werden, um wieder die größtmögliche Leserate des Detektionssystems zu erreichen.
   Diese Überprüfung kann beispielsweise durch einen Vergleich erfolgen, ob die Anzahl der aktuell über den Datenbus 21, 23 empfangenen Lesedatensätze der Anzahl der Sensoren 11, 13, 15 entspricht, die beispielsweise beim Systemstart von der Bussteuereinheit 17 des Primärzweig als Slave-Liste ermittelt worden ist.
(d) Der bereits erläuterte Gateway-Sensor 11 kann variabel festlegbar sein. Mit anderen Worten können die Sensoren 11, 13, 15 dergestalt ausgebildet sein, dass wahlweise jeder dieser Sensoren als Gateway-Sensor konfiguriert werden. Dadurch kann im Falle eines Defekts desjenigen Sensors 11, der ursprünglich als Gateway-Sensor konfiguriert worden ist, ein anderer Sensor 13, 15 als Gateway-Sensor festgelegt werden, um weiterhin eine Datenkommunikation zwischen den Bussteuereinheiten 17, 19 über die Datenbusse 21, 23 zu ermöglichen.
   In diesem Zusammenhang ist es von besonderem Vorteil, wenn die Bussteuereinheit 17 des Primärzweigs regelmäßig überprüft, ob der zuletzt als Gateway konfigurierte Sensor 11 defekt ist. Diese Überprüfung kann, wie vorstehend unter (b) erläutert, beispielsweise indirekt dadurch erfolgen, dass die beiden Bussteuereinheiten 17, 19 sowohl über die Datenbusse 21, 24 ein "heartbeat"-Telegramm austauschen als auch über eine Direktverbindungsleitung 63 sich gegenseitig Kontrollsignale übermitteln.
(e) Das Detektionssystem besitzt zwei Lichtschranken 25, 27, die beide jeweils mit beiden Bussteuereinheiten 17, 19 verbunden sind. Dadurch kann auch im Falle eines Defekts einer der beiden Lichtschranken 25, 27 von den Bussteuereinheiten 17, 19 noch ein Objekterfassungssignal empfangen werden, um die gelesenen Barcodes 45, 47 dem korrekten Gepäckstück 41 bzw. 43 zuordnen zu können.
   Solange jedoch beide Lichtschranken 25, 27 fehlerfrei funktionieren, können ihre Objekterfassungssignale beispielsweise folgendermaßen verarbeitet werden: Die beiden Lichtschranken 25, 27 werden in eine Primär-Lichtschranke 25 und eine Sekundär-Lichtschranke 27 unterteilt. Prinzipiell wird von der Bussteuereinheit 17 des Primärzweigs das Objekterfassungssignal der Primär-Lichtschranke 25 verwendet, um die Transportbewegung eines Gepäckstücks 41, 43 zu verfolgen. Lediglich bei einem Defekt der Primär-Lichtschranke 25 verwendet die Bussteuereinheit 17 das Objekterfassungssignal der Sekundär-Lichtschranke 27. Sofern der Zwischenabstand 61 zwischen den beiden Lichtschranken 25, 27 bekannt ist, führt einderartiger Wechsel von den Objekterfassungssignalen der Primär-Lichtschranke 25 zu den Objekterfassungssignalen der Sekundär-Lichtschranke 27 zu keinem Datenverlust, da dieser Zwischenabstand 61 als Offset berücksichtigt werden kann.
   Die Überwachung, ob eine der beiden Lichtschranken 25, 27 defekt ist, kann beispielsweise folgendermaßen durchgeführt werden: Die beiden Lichtschranken 25, 27 sind, wie bereits im Zusammenhang mit Fig. 2 erläutert, bezüglich der Transportrichtung 49 versetzt zueinander angeordnet. Nach der Erzeugung eines Objekterfassungssignals durch die vorgeschaltete Lichtschranke 25 wird überprüft, ob innerhalb eines Zeitintervalls, das dem bekannten Zwischenabstand 61 und der Transportgeschwindigkeit des Transportbands 39 entspricht, auch ein Objekterfassungssignal von der nachgeschalteten Lichtschranke 27 erzeugt wird. Die genannte Transportgeschwindigkeit ist dabei aus den Inkrementsignalen der Inkrementalgeber 29, 31 bekannt. Falls die erläuterte Prüfung ein negatives Signal liefert, wird von einem Defekt der nachgeschalteten Lichtschranke 27 ausgegangen.
   Außerdem wird bei Erzeugung eines Objekterfassungssignals durch die nachgeschaltete Lichtschranke 27 überprüft, ob vor der Erzeugung dieses Objekterfassungssignals innerhalb eines Zeitintervalls, das wiederum dem bekannten Zwischenabstand 61 und der Transportgeschwindigkeit des Transportbands 39 entspricht, bereits ein Objekterfassungssignal durch die vorgeschaltete Lichtschranke 25 erzeugt worden ist. Nichtzutreffendenfalls wird von einem Defekt dieser vorgeschalteten Lichtschranke 25 ausgegangen.
   Falls auf diese Weise ein Defekt einer Lichtschranke 25, 27 festgestellt wird, wird ein entsprechendes Warnsignal erzeugt, so dass die Lichtschranke 25, 27 möglichst umgehend ersetzt werden kann.
(f) Bei der erläuterten Anwendung des Detektionssystems innerhalb einer Gepäcksortieranlage besteht die Gefahr, dass ein von dem Transportband 39 transportiertes Gepäckstück 41, 43 eine Lichtschranke 25, 27 oder einen Teil hiervon berührt und dadurch räumlich versetzt. Insbesondere ist es möglich, dass die Sende-/Empfangseinheit 53 der vorgeschalteten Lichtschranke 25 derartig verschwenkt wird, dass der Sendelichtstrahl auf den Reflektor 59 der nachgeschalteten Lichtschranke 27 gerichtet ist und von diesem reflektiert wird, so dass die Lichtschranke 25 nicht mehr senkrecht zu der Transportrichtung 49 verläuft und somit entlang des Transportbands 39 nicht mehr ihren ursprünglichen Verlauf besitzt. Diese Änderung führt zwar nicht zu einem Funktionsausfall der Lichtschranke 25 und wird daher vom Detektionssystem nicht ohne Weiteres registriert, sie kann jedoch zu einer falschen Zuordnung der gelesenen Barcodes 45, 47 zu den Gepäckstücken 41, 43 führen, da die Lichtschranke 25 nun einen anderen Abstand zu dem Überwachungsbereich 51 einnimmt.
   Um dieses Risiko zu vermeiden, können die Reflektoren 57, 59 und die Sende-/Empfangseinheiten 53, 55 der Lichtschranken 25, 27 jeweils mit tiefen Lochblenden 65 versehen werden, wie in Fig. 3 gezeigt. Diese Lochblenden 65 bewirken, dass im Falle eines unerwünschten räumlichen Versetzens oder Verschwenkens der Sende-/ Empfangseinheit 53, 55 oder des Reflektors 57, 59 die betreffende Lichtschranke 25, 27 kein Objekterfassungssignal mehr liefert und somit als defekt erkannt werden kann. Alternativ ist es auch ausreichend, wenn lediglich der Reflektor 57, 59 oder lediglich die Sende-/ Empfangseinheit 53, 55 mit einer derartigen Lochblende 65 versehen wird.
   Alternativ oder zusätzlich kann das erläuterte Risiko von falschen Objekterfassungssignalen dadurch vermieden werden, dass benachbarte Lichtschranken 25, 27 gegensinnig parallel zueinander angeordnet werden, wie in Fig. 4 gezeigt. Mit anderen Worten ist der Reflektor 57 der einen Lichtschranke 25 bezüglich des Transportbands 39 auf der jeweils anderen Seite angeordnet als der Reflektor 59 der anderen Lichtschranke 27. Entsprechendes gilt für die jeweilige Sende-/Empfangseinheit 53 bzw. 55 dieser beiden Lichtschranken 25, 27. Falls nun die Sende-/Empfangseinheit 53 der einen Lichtschranke 25 von einem Gepäckstück 41, 43 erfasst und verschwenkt wird, kann diese Sende-/Empfangseinheit 53 nicht unbeabsichtigt auf den Reflektor 59 der anderen Lichtschranke 27 gerichtet sein, da dieser Reflektor 59 sich auf derselben Seite des Transportbandes 39 befindet wie die genannte Sende-/Empfangseinheit 53. Dadurch ist ebenfalls weitestgehend ausgeschlossen, dass die betreffende Lichtschranke 25 weiterhin Objekterfassungssignale erzeugt und weiterleitet, obwohl eine signifikante Betriebsstörung eingetreten ist. Stattdessen kann nun der Ausfall dieser Lichtschranke 25 erkannt werden.
(g) Wie in Fig. 1 und 2 gezeigt, können zwei Inkrementalgeber 29, 31 vorgesehen sein, die unabhängig voneinander Inkrementsignale zur Anzeige der Transportgeschwindigkeit der Gepäckstücke 41, 43 erzeugen, und die beide jeweils mit beiden Bussteuereinheiten 17, 19 verbunden sind. Dadurch ist das Detektionssystem auch hinsichtlich der Inkrementalgeber 29, 31 redundant ausgelegt, so dass bei einem Defekt einer der beiden Inkrementalgeber 29, 31 die Bussteuereinheiten 17, 19 weiterhin Inkrementsignale erhalten.
   Die Inkrementsignale können prinzipiell derart verarbeitet werden, dass bei fehlerfreiem Betrieb des Detektionssystems die Bussteuereinheit 17 des Primärzweigs die Positionsverfolgung der Gepäckstücke 41, 43 (tracking) übernimmt.
   Die beiden Inkrementalgeber 29, 31 können in einen Primär-Inkrementalgeber 29 und einen Sekundär-Inkrementalgeber 31 unterteilt sein, wobei bei fehlerfreiem Betrieb dieser beiden Inkrementalgeber 29, 31 die Inkrementsignale des Primär-Inkrementalgebers 39 verwendet werden, um die Position der Gepäckstücke 41, 43 zu verfolgen. Lediglich bei einem Defekt dieses Primär-Inkrementalgebers 29 werden nachfolgend die Inkrementsignale des Sekundär-Inkrementalgebers 31 verwendet.
   Eine Überwachung, ob ein derartiger Defekt eines Inkrementalgebers 29, 31 vorliegt, kann beispielsweise durchgeführt werden wie folgt: Innerhalb jeder Bussteuereinheit 17, 19 wird ein Zähler 67 geführt, der durch die Inkrementsignale des einen Inkrementalgebers 29 hochgezählt und durch die Inkrementsignale des anderen Inkrementalgebers 31 heruntergezählt wird. Sobald der Zähler 67 einen vorgegebenen unteren Schwellwert 69 unterschreitet, wird von einem Defekt des erstgenannten Inkrementalgebers 29 ausgegangen. Umgekehrt wird ein Überschreiten eines oberen Schwellwerts 71 als ein Defekt des letztgenannten Inkrementalgebers 31 interpretiert. Dieser Schwellwertvergleich ist in Fig. 5 schematisch gezeigt.
   Damit lediglich geringfügige Unterschiede zwischen der Inkrementssignalbildung innerhalb der beiden Inkrementalgeber 29, 31 nicht als Defekt eines der beiden Inkrementalgeber 29, 31 interpretiert werden, wird der Zähler 67 nach vorbestimmten Zeitintervallen regelmäßig zurückgesetzt, also auf einen Mittelwert zwischen dem oberen Schwellwert 71 und dem unteren Schwellwert 69 gesetzt.
(h) Es sind zwei Energieversorgungseinheiten 73, 75 vorgesehen, wobei jeder Sensor 11, 13, 15 an beide Energieversorgungseinheiten 73, 75 angeschlossen ist, um wahlweise von der einen oder von der anderen Energieversorgungseinheit 73, 75 mit elektrischer Energie versorgt zu werden. Dadurch ist auch die Energieversorgung der Sensoren 11, 13, 15 redundant ausgelegt, so dass im Falle eines Defekts einer Energieversorgung 73, 75 alle Sensoren 11, 13, 15 weiterhin funktionsfähig sind.

Vorzugsweise ist jeder Sensor 11, 13, 15 mit einer Kurzschluss-Sicherungsschaltung versehen, durch die gewährleistet ist, dass auch im Falle eines Defekts der einen Energieversorgungseinheit 43 kein Kurzschluss an dem jeweiligen Versorgungseingang der Sensoren 11, 13, 15 auftritt und die andere Energieversorgungseinheit 75 die Energieversorgung somit ungestört übernehmen kann.

Fig. 6 zeigt ein Beispiel einer derartigen Kurzschluss-Sicherungsschaltung. Gezeigt ist ein erster Anschluss 77 für die eine Energieversorgungseinheit 73 und ein zweiter Anschluss 79 für die andere Energieversorgungseinheit 75. Zwischen diesen beiden Anschlüssen 77, 79 sind zwei Dioden 81 in gegenpoliger Anordnung vorgesehen, wobei zwischen den beiden Dioden 81 der Versorgungseingang 83 des betreffenden Sensors 11, 13, 15 vorgesehen ist.

Die Bussteuereinheiten 17, 19 werden jeweils lediglich von einer der beiden Energieversorgungseinheiten 73, 75 versorgt. Es ist optional möglich, dass die Versorgungsspannung der jeweils einen Bussteuereinheit 17, 19 über einen Schalteingang der anderen Bussteuereinheit 19 bzw. 17 überwacht wird. Dadurch kann nicht nur der Ausfall einer Energieversorgungseinheit 73, 75 detektiert werden, sondern es kann bei einem Ausfall einer Bussteuereinheit 17, 19 auch noch zwischen einem Defekt dieser Bussteuereinheit 17, 19 und einem Defekt der jeweiligen Energieversorgungseinheit 73 bzw. 75 differenziert werden.

### Bezugszeichenliste

- 11, 13, 15: optoelektronischer Sensor
- 17, 19: Bussteuereinheit
- 21,23: Datenbus
- 25, 27: Lichtschranke
- 29, 31 1: Inkrementalgeber
- 33: Leitrechner
- 35, 37: Systemschnittstelle
- 39: Transportband
- 41, 43: Gepäckstück
- 45, 47: Barcode
- 49: Transportrichtung
- 51: Überwachungsbereich
- 53, 55: Sende-/Empfangseinheit
- 57, 59: Reflektor
- 61: Zwischenabstand
- 63: Direktverbindungsleitung
- 65: Lochblende
- 67: Zähler
- 69: unterer Schwellwert
- 71: oberer Schwellwert
- 73, 75: Energieversorgungseinheit
- 77, 79: Anschluss
- 81: Diode
- 83: Versorgungseingang

## Patentansprüche

1. Detektionssystem mit
- mehreren Sensoren (11, 13, 15),
- zumindest zwei Datenbussen (21, 23), denen jeweils eine eigene Bussteuereinheit (17, 19) zugeordnet ist, und
- zumindest einer Systemschnittstelle (35, 37) zur Ausgabe von Ausgabedaten an eine übergeordnete Systemsteuereinheit (33),
wobei jeder der mehreren Sensoren (11, 13, 15) sowohl an den einen (21) als auch an den anderen (23) der beiden Datenbusse angeschlossen ist, und
wobei der eine (21) der beiden Datenbusse mit der zugeordneten Bussteuereinheit (17) einerseits einen Primärzweig und der andere Datenbus (23) mit der zugeordneten Bussteuereinheit (19) andererseits
einen Sekundärzweig, der dem Primärzweig untergeordnet ist, darstellt,
**dadurch gekennzeichnet, dass**
- das Detektionssystem zur Detektion und Verfolgung von optischen Codes (45, 47) an Objekten (41, 43), die entlang eines Überwachungsbereichs (51) transportiert werden, ausgebildet ist,
- die mehreren Sensoren als optoelektronische Sensoren (11, 13, 15) zum Einlesen der Codes und zum Erzeugen entsprechender Lesedaten ausgebildet sind, und
- zumindest zwei Auslöseeinrichtungen (25, 27) zum Erfassen eines in Richtung des Überwachungsbereichs (51) transportierten Objekts (41, 43) und zum Erzeugen eines entsprechenden Objekterfassungssignals vorgesehen sind, wobei jede der beiden Auslöseeinrichtungen (25, 27) sowohl mit der einen (17) als auch mit der anderen (19) der beiden Bussteuereinheiten verbunden ist.

2. Detektionssystem nach Anspruch 1,
**dadurch gekennzeichnet,**
**dass** die beiden Auslöseeinrichtungen (25, 27) bezüglich der Transportrichtung (49) der Objekte in einem vorbestimmten Zwischenabstand (61) zueinander angeordnet sind, so dass sie bezüglich der Transportrichtung der Objekte einander vorgeschaltet bzw. nachgeschaltet sind.

3. Detektionssystem nach Anspruch 2,
**dadurch gekennzeichnet,**
**dass** zumindest eine der Bussteuereinheiten (17, 19) eine Überwachungsschaltung aufweist, durch die überprüfbar ist,
- ob nach der Erzeugung eines Objekterfassungssignals durch die vorgeschaltete Auslöseeinrichtung (25) innerhalb eines Zeitintervalls, das dem vorbestimmten Zwischenabstand (61) und der Transportgeschwindigkeit der Objekte (41, 43) entspricht, auch ein Objekterfassungssignal durch die nachgeschaltete Auslöseeinrichtung (27) erzeugt wird, und
- ob vor der Erzeugung eines Objekterfassungssignals durch die nachgeschaltete Auslöseeinrichtung (27) innerhalb eines Zeitintervalls, das dem vorbestimmten Zwischenabstand (61) und der Transportgeschwindigkeit der Objekte (41, 43) entspricht, bereits ein Objekterfassungssignal durch die vorgeschaltete Auslöseeinrichtung (25) erzeugt worden ist,
wobei durch die Überwachungsschaltung vorzugsweise ein Warnsignal erzeugbar ist, falls die Überprüfung einen Defekt einer Auslöseeinrichtung (25, 27) ergibt.

4. Detektionssystem nach einem der vorhergehenden Ansprüche, **dadurch gekennzeichnet,**
**dass** jede Auslöseeinrichtung eine Lichtschranke (25, 27) mit einer Sende-/Empfangseinheit (53, 55) und einem Reflektor (57, 59) aufweist, wobei die Sende-/Empfangseinheit jeder Lichtschranke einerseits und der Reflektor dieser Lichtschranke andererseits bezüglich der Bewegungsbahn (39) der transportierten Objekte (41, 43) gegenüberliegend zueinander angeordnet sind, und wobei der Reflektor (57, 59) dieser Lichtschranke, oder die Sende-/Empfangseinheit (53, 55) dieser Lichtschranke, oder beide, hinter einer jeweiligen Lochblende (65) angeordnet sind, so dass im Falle eines unbeabsichtigten Versetzens der Sende-/ Empfangseinheit oder des Reflektors die Lichtübertragung dieser Lichtschranke unterbrochen ist,
und/oder
der Reflektor (57) der einen Lichtschranke (25) bezüglich der Bewegungsbahn der transportierten Objekte auf einer anderen Seite als der Reflektor (59) der anderen Lichtschranke (27) angeordnet ist.

5. Detektionssystem nach einem der vorhergehenden Ansprüche, **dadurch gekennzeichnet,**
**dass** die beiden Auslöseeinrichtungen (25, 27) in eine Primär-Auslöseeinrichtung (25) und eine Sekundär-Auslöseeinrichtung (27) unterteilt sind,
wobei die Bussteuereinheiten (17, 19) dergestalt konfiguriert sind, dass bei fehlerfreiem Betrieb der beiden Auslöseeinrichtungen das Objekterfassungssignal der Primär-Auslöseeinrichtung (25) zum Verfolgen der Transportbewegung des erfassten Objekts (41, 43) verwendet wird und dass lediglich bei einem Defekt der Primär-Auslöseeinrichtung das Objekterfassungssignal der Sekundär-Auslöseeinrichtung (27) zum Verfolgen der Transportbewegung des erfassten Objekts verwendet wird.

6. Detektionssystem nach einem der vorhergehenden Ansprüche, **dadurch gekennzeichnet,**
**dass** die beiden Bussteuereinheiten (17, 19) dergestalt konfiguriert sind, dass bei fehlerfreiem Betrieb des Detektionssystems lediglich die innerhalb des Primärzweigs (17, 21) ermittelten Ausgabedaten an die Systemschnittstelle (35, 37) ausgegeben werden.

7. Detektionssystem nach einem der vorhergehenden Ansprüche, **dadurch gekennzeichnet,**
**dass** zumindest eine der Bussteuereinheiten (17, 19) eine Überwachungsschaltung zur regelmäßigen Überprüfung aufweist, ob einer der Datenbusse (21, 23) defekt ist.

8. Detektionssystem nach Anspruch 7,
**dadurch gekennzeichnet,**
**dass** durch die Bussteuereinheit (17, 19) eine Vertauschung der Unterteilung in Primärzweig und Sekundärzweig auslösbar ist, falls die Überprüfung einen Defekt des Datenbusses (21) des ursprünglichen Primärzweigs ergibt,
und/oder
**dass** durch die Bussteuereinheit (17, 19) ein Warnsignal erzeugbar ist, falls die Überprüfung einen Defekt des Datenbusses (23) des Sekundärzweigs ergibt,
und/ oder
**dass** die Überwachungsschaltung eine Vergleichsschaltung zum Vergleichen der für die beiden Datenbusse (21, 23) ermittelten Überprüfungsergebnisse aufweist, wobei die Vergleichsschaltung einen Defekt desjenigen Datenbusses anzeigt, für den Signaldaten einer geringeren Anzahl von Sensoren (11, 13, 15) ermittelt werden als für den jeweils anderen Datenbus.

9. Detektionssystem nach einem der vorhergehenden Ansprüche, **dadurch gekennzeichnet,**
**dass** zumindest eine der Bussteuereinheiten (17, 19) eine Überwachungsschaltung zur regelmäßigen Überprüfung aufweist, ob einer der optoelektronischen Sensoren (11, 13, 15) defekt ist,
wobei durch die Überwachungsschaltung ein Warnsignal erzeugbar ist, falls die Überprüfung einen Defekt eines Sensors ergibt.

10. Detektionssystem nach einem der vorhergehenden Ansprüche, **dadurch gekennzeichnet,**
**dass** jeder der mehreren optoelektronischen Sensoren (11, 13, 15) durch einen Codescanner, insbesondere einen Barcodescanner gebildet ist.

11. Verfahren zur Detektion und Verfolgung von optischen Codes (45, 47) an Objekten (41, 43), die entlang eines Überwachungsbereichs (51) transportiert werden, mittels eines Detektionssystems gemäß einem der Ansprüche 1 bis 10.

12. Verfahren nach Anspruch 11,
**dadurch gekennzeichnet,**
**dass** bei fehlerfreiem Betrieb des Detektionssystems lediglich Ausgabedaten, die innerhalb des Primärzweigs (17, 21) ermittelt werden, an eine Systemschnittstelle (35, 37) ausgegeben werden.

13. Verfahren nach einem der Ansprüche 11 oder 12,
**dadurch gekennzeichnet,**
**dass** regelmäßig überprüft wird, ob einer der Datenbusse (17, 19) defekt ist.

14. Verfahren nach Anspruch 13,
**dadurch gekennzeichnet,**
**dass** die Unterteilung in Primärzweig und Sekundärzweig vertauscht wird, falls die Überprüfung einen Defekt des Datenbusses (17) des ursprünglichen Primärzweigs ergibt.

15. Verfahren nach einem der Ansprüche 13 oder 14,
**dadurch gekennzeichnet,**
**dass** ein Warnsignal erzeugt wird, falls die Überprüfung einen Defekt des Datenbusses (19) des Sekundärzweiges ergibt.

16. Verfahren nach einem der Ansprüche 11 bis 15,
**dadurch gekennzeichnet,**
**dass** regelmäßig überprüft wird, ob einer der optoelektronischen Sensoren (11, 13, 15) defekt ist, wobei ein Warnsignal erzeugt wird, falls die Überprüfung einen Defekt eines Sensors ergibt.

17. Verfahren nach einem der Ansprüche 11 bis 16 zur Detektion und Verfolgung von optischen Codes (45, 47) an Objekten (41, 43), die entlang eines Überwachungsbereiches (51) transportiert werden, mittels eines Detektionssystemes gemäß einem der Ansprüche 3 bis 5,
wobei mit Hilfe der Überwachungsschaltung überprüft wird,
- ob nach der Erzeugung eines Objekterfassungssignals durch die vorgeschaltete Auslöseeinrichtung (25) innerhalb eines Zeitintervalls, das dem vorbestimmten Zwischenabstand (61) und der Transportgeschwindigkeit der Objekte (41, 43) entspricht, auch ein Objekterfassungssignal durch die nachgeschaltete Auslöseeinrichtung (27) erzeugt wird, und
- ob vor der Erzeugung eines Objekterfassungssignales durch die nachgeschaltete Auslöseeinrichtung (27) innerhalb eines Zeitintervalls, das dem vorbestimmten Zwischenabstand (61) und der Transportgeschwindigkeit der Objekte (41, 43) entspricht, bereits ein Objekterfassungssignal durch die vorgeschaltete Auslöseeinrichtung (25) erzeugt worden ist.

18. Verfahren nach Anspruch 17,
**dadurch gekennzeichnet,**
**dass** die Überwachungsschaltung ein Warnsignal erzeugt, falls die Überprüfung einen Defekt einer Auslöseeinrichtung (25, 27) ergibt.

## Claims

1. A detection system having
- a plurality of sensors (11, 13, 15);
- at least two data buses (21, 23) each having its own associated bus control unit (17, 19); and
- at least one system interface (35, 37) to output output data to a higher level system control unit (33),
wherein each of the plurality of sensors (11, 13, 15) is connected both to the one (21) and to the other (23) of the two data buses; and wherein, on the one hand, the one (21) of the two data buses with the associated bus control unit (17) represents a primary branch and, on the other hand, the other data bus (23) with the associated bus control unit (19) represents a secondary branch which is subordinate to the primary branch,
**characterized in that**
- the detection system is formed for the detection and tracking of optical codes (45, 47) on objects (41, 43) which are transported along a monitored zone (51);
- the plurality of sensors are formed as optoelectronic sensors (11, 13, 15) to read in the codes and to generate corresponding reading data; and
- at least two trigger devices (25, 27) are provided to detect an object (41, 43) transported in the direction of the monitored zone (51) and to generate a corresponding object detection signal, wherein each of the two trigger devices (25, 27) is connected both to the one (17) and to the other (19) of the two bus control units.

2. A detection system in accordance with claim 1,
**characterized in that**
the two trigger devices (25, 27) are associated with one another at a pre-determined intermediate spacing (61) with respect to the transport direction (49) of the objects such that they are disposed upstream or downstream of one another with respect to the transport direction of the objects.

3. A detection system in accordance with claim 2,
**characterized in that**
at least one of the bus control units (17, 19) has a monitoring circuit by which a check can be made of
- whether an object detection signal is also generated by the downstream trigger device (27) after the generation of an object detection signal by the upstream trigger device (25) within a time interval which corresponds to the pre-determined intermediate spacing (61) and to the transport speed of the objects (41, 43); and
- whether an object detection signal was already generated by the upstream trigger device (25) before the generation of an object detection signal by the downstream trigger device (27) within a time interval which corresponds to the pre-determined intermediate distance (61) and the transport speed of the objects (41,43),
wherein an alarm signal can be generated by the monitoring circuit if the check reveals a defect of a trigger device (25, 27).

4. A detection system in accordance with any one of the preceding claims,
**characterized in that**
each trigger device has a light barrier (25, 27) with a transmitter/ receiver unit (53, 55) and a reflector (57, 59), wherein the transmitter/receiver unit of each light barrier, on the one hand, and the reflector of this light barrier, on the other hand, are arranged lying opposite one another with respect to the path of movement (39) of the transported objects (41, 43); and wherein the reflector (57, 59) of this light barrier, or the transmitter/receiver unit (53, 55) of this light barrier, or both, are arranged behind a respective aperture diaphragm (65) so that the light transmission of this light barrier is interrupted in the event of an unintentional offset of the transmitter/receiver unit or of the reflector;
and/or
the reflector (57) of the one light barrier (25) is arranged on a different side from the reflector (59) of the other light barrier (27) with respect to the path of movement of the transported objects.

5. A detection system in accordance with any one of the preceding claims,
**characterized in that**
the two trigger devices (25, 27) are divided into a primary trigger device (25) and a secondary trigger device (27),
wherein the bus control units (17, 19) are configured such that, with a defect-free operation of the two trigger devices, the object detection signal of the primary trigger device (25) is used to track the transport movement of the detected object (41, 43); and **in that** the object detection signal of the secondary trigger device (27) is only used to track the transport movement of the detected object with a defect of the primary trigger device.

6. A detection system in accordance with any one of the previous claims,
**characterized in that**
the two bus control units (17, 19) are configured such that, with a defect-free operation of the detection system, only the output data determined within the primary branch (17, 21) are output to the system interface (35, 37).

7. A detection system in accordance with any one of the preceding claims,
**characterized in that**
at least one of the bus control units (17, 19) has a monitoring circuit to check regularly whether one of the data buses (21, 23) is defective.

8. A detection system in accordance with claim 7,
**characterized in that**
a swapping of the division into primary branch and secondary branch can be triggered by the bus control unit (17, 19) if the check reveals a defect in the data bus (21) of the original primary branch; and/or
**in that** an alarm signal can be generated by the bus control unit (17, 19) if the check reveals a defect in the data bus (23) of the secondary branch;
and/or
**in that** the monitoring circuit has a comparison circuit to compare the check results determined for the two data buses (21, 23), wherein the comparison circuit indicates a defect **in that** data bus for which signal data of a lower number of sensors (11, 13, 15) are determined than for the other respective data bus

9. A detection system in accordance with any one of the preceding claims,
**characterized in that**
at least one of the bus control units (17, 19) has a monitoring circuit to check regularly whether one of the optoelectronic sensors (11, 13 15) is defective,
wherein an alarm signal can be generated by the monitoring circuit if the check reveals a defect of a sensor.

10. A detection system in accordance with any one of the preceding claims,
**characterized in that**
each of the plurality of optoelectronic sensors (11, 13, 15) is formed by a code scanner, in particular by a barcode scanner.

11. A method for the detection and tracking of optical codes (45, 47) on objects (41, 43) which are transported along a monitored zone (51), by means of a detection system in accordance with any one of the claims 1 to 10.

12. A method in accordance with claim 11,
**characterized in that**,
with a defect-free operation of the detection system, only output data determined within the primary branch (17, 21) are output to a system interface (35, 37).

13. A method in accordance with one of the claims 11 or 12,
**characterized in that**
a check is regularly made of whether one of the data buses (17, 19) is defective.

14. A method in accordance with claim 13,
**characterized in that**
the division into primary branch and secondary branch is swapped if the check reveals a defect in the data bus (17) of the original primary branch.

15. A method in accordance with one of the claims 13 or 14,
**characterized in that**
an alarm signal is preferably generated if the check reveals a defect in the data bus (19) of the secondary branch.

16. A method in accordance with any one of the claims 11 to 13,
**characterized in that**
a check is regularly made of whether one of the optoelectronic sensors (11, 13, 15) is defective, with an alarm signal being generated if the check reveals a defect in a sensor.

17. A method in accordance with any one of the claims 11 to 16 for the detection and tracking of optical codes (45, 47) on objects (41, 43) which are transported along a monitored zone (51) by means of a detection system in accordance with any one of the claims 3 to 5, wherein a check is made with the aid of the monitoring circuit
- whether an object detection signal is also generated by the downstream trigger device (27) after the generation of an object detection signal by the upstream trigger device (25) within a time interval which corresponds to the pre-determined intermediate spacing (61) and to the transport speed of the objects (41, 43); and
- whether an object detection signal was already generated by the upstream trigger device (25) before the generation of an object detection signal by the downstream trigger device (27) within a time interval which corresponds to the pre-determined intermediate distance (61) and the transport speed of the objects (41, 43).

18. A method in accordance with claim 17,
**characterized in that**
the monitoring circuit generates an alarm signal if the check reveals a defect of a trigger device (25, 27).

## Revendications

1. Système de détection comprenant
- plusieurs capteurs (11, 13, 15),
- au moins deux bus de données (21, 23) à chacun desquels est associée une propre unité de commande de bus (17, 19), et
- au moins une interface système (35, 37) pour la sortie de données de sortie vers une unité de commande système maître (33),
dans lequel chacun desdits plusieurs capteurs (11, 13, 15) est raccordé aussi bien à l'un (21) qu'à l'autre (23) des deux bus de données, et
dans lequel l'un (21) des deux bus de données avec l'unité de commande de bus associée (17) d'une part représente une branche primaire, et l'autre bus de données (23) avec l'unité de commande de bus associée (19) d'autre part représente une branche secondaire qui est subordonnée à la branche primaire,
**caractérisé en ce que**
- le système de détection est réalisé pour la détection et la poursuite de codes optiques (45, 47) sur des objets (41, 43) qui sont transportés le long d'une zone de surveillance (51),
- lesdits plusieurs capteurs sont réalisés sous forme de capteurs optoélectroniques (11, 13, 15) pour lire les codes et pour générer des données de lecture correspondantes, et
- il est prévu au moins deux dispositifs de déclenchement (25, 27) pour détecter un objet (41, 43) transporté en direction de la zone de surveillance (51) et pour générer un signal de détection d'objet correspondant, chacun des deux dispositifs de déclenchement (25, 27) étant relié aussi bien à l'une (17) qu'à l'autre (19) des deux unités de commande de bus.

2. Système de détection selon la revendication 1,
**caractérisé en ce que** les deux dispositifs de déclenchement (25, 27) sont agencés à une distance intermédiaire prédéterminée (61) l'un de l'autre par référence à la direction de transport (49) des objets, de sorte qu'ils se trouvent mutuellement en amont ou en aval par référence à la direction de transport des objets.

3. Système de détection selon la revendication 2,
**caractérisé en ce que**
au moins une des unités de commande de bus (17, 19) comprend un circuit de surveillance au moyen duquel il est possible de vérifier :
- si, après la génération d'un signal de détection d'objet par le dispositif de déclenchement (25) situé en amont, à l'intérieur d'un intervalle temporel qui correspond à la distance intermédiaire prédéterminée (61) et à la vitesse de transport des objets (41, 43), un signal de détection d'objet est également généré par le dispositif de déclenchement (27) situé en aval, et
- si, avant la génération d'un signal de détection d'objet par le dispositif de déclenchement (27) situé en aval, à l'intérieur d'un intervalle temporel qui correspond à la distance intermédiaire prédéterminée (61) et à la vitesse de transport des objets (41, 43), un signal de détection d'objet a déjà été généré par le dispositif de déclenchement (25) situé en amont,
et dans lequel au moyen du circuit de surveillance, il est possible de générer de préférence un signal d'avertissement si la vérification donne en résultat un défaut d'un dispositif de déclenchement (25, 27).

4. Système de détection selon l'une des revendications précédentes, **caractérisé en ce que** chaque dispositif de déclenchement comprend une barrière lumineuse (25, 27) avec une unité émettrice/réceptrice (53, 55) et un réflecteur (57, 59), l'unité émettrice/réceptrice de chaque barrière lumineuse d'une part et le réflecteur de cette barrière lumineuse d'autre part étant agencés en opposition mutuelle par rapport à la voie de déplacement (39) des objets transportés (41, 43), et dans lequel le réflecteur (57, 59) de cette barrière lumineuse, ou l'unité émettrice/réceptrice (53, 55) de cette barrière lumineuse, ou les deux, sont agencés derrière un diaphragme à trous respectif (65), de sorte que dans le cas d'un décalage inopiné de l'unité émettrice/réceptrice ou du réflecteur, la transmission de lumière de cette barrière lumineuse est interrompue,
et/ou **en ce que** le réflecteur (57) d'une barrière lumineuse (25) est agencé, par référence à la voie de déplacement des objets transportés, sur un autre côté que le réflecteur (59) de l'autre barrière lumineuse (27).

5. Système de détection selon l'une des revendications précédentes, **caractérisé en ce que** les deux dispositifs de déclenchement (25, 27) sont subdivisés en un dispositif de déclenchement primaire (25) et en un dispositif de déclenchement secondaire (27),
dans lequel les unités de commande de bus (17, 19) sont configurées de telle façon que, lors du fonctionnement sans erreur des deux dispositifs de déclenchement, le signal de détection d'objet du dispositif de déclenchement primaire (25) est utilisé pour la poursuite du mouvement de transport de l'objet détecté (41, 43), et **en ce que** seulement en cas de défaut du dispositif de déclenchement primaire le signal de détection d'objet du dispositif de déclenchement secondaire (27) est utilisé pour la poursuite du mouvement de transport de l'objet détecté.

6. Système de détection selon l'une des revendications précédentes, **caractérisé en ce que** les deux unités de commande de bus (17, 19) sont configurées de telle façon que lors du fonctionnement sans erreur du système de détection, seules les données de sortie déterminées à l'intérieur de la branche primaire (17, 21) sont envoyées à l'interface système (35, 37).

7. Système de détection selon l'une des revendications précédentes, **caractérisé en ce que** l'une au moins des unités de commande de bus (17, 19) comprend un circuit de surveillance pour vérifier régulièrement si l'un des bus de données (21, 23) est défectueux.

8. Système de détection selon la revendication 7,
**caractérisé en ce qu'**une permutation de la subdivision en ramification primaire et en ramification secondaire peut être déclenchée par l'unité de commande de bus (17, 19), au cas où la vérification donne en résultat un défaut du bus de données (21) de la ramification primaire d'origine,
et/ou
**en ce qu'**un signal d'avertissement peut être généré par l'unité de commande de bus (17, 19), au cas où la vérification donne en résultat un défaut du bus de données (23) de la ramification secondaire,
et/ou
**en ce que** le circuit de surveillance comprend un circuit comparateur pour comparer les résultats de vérification déterminés pour les deux bus de données (21, 23), le circuit comparateur indiquant un défaut de celui des bus de données pour lequel on détermine des signaux de données provenant d'un plus petit nombre de capteurs (11, 13, 15) que pour l'autre bus de données respectif.

9. Système de détection selon l'une des revendications précédentes, **caractérisé en ce qu'**au moins une des unités de commande de bus (17, 19) comprend un circuit de surveillance pour vérifier régulièrement si l'un des capteurs optoélectroniques (11, 13, 15) est défectueux,
et au moyen du circuit de surveillance il est possible de générer un signal d'avertissement au cas où la vérification donne en résultat un défaut d'un capteur.

10. Système de détection selon l'une des revendications précédentes, **caractérisé en ce que** chacun des plusieurs capteurs optoélectroniques (11, 13, 15) est formé par un scanneur à code, en particulier un scanneur à codes-barres.

11. Procédé pour la détection et la poursuite de codes optiques (45, 47) sur les objets (41, 43) qui sont transportés le long d'une zone de surveillance (51), au moyen d'un système de détection selon l'une des revendications 1 à 10.

12. Procédé selon la revendication 11,
**caractérisé en ce que** lors d'un fonctionnement sans défaut du système de détection, seules des données de sortie qui sont déterminées à l'intérieur de la ramification primaire (17, 21) sont fournies à une interface système (35, 37).

13. Procédé selon l'une des revendications 11 ou 12,
**caractérisé en ce que** l'on vérifie régulièrement si l'un des bus de données (17, 19) est défectueux.

14. Procédé selon la revendication 13,
**caractérisé en ce que** la subdivision en ramification primaire et en ramification secondaire est permutée au cas où la vérification donne en résultat un défaut du bus de données (17) de la ramification primaire d'origine.

15. Procédé selon l'une des revendications 13 ou 14,
**caractérisé en ce que** l'on génère un signal d'avertissement au cas où la vérification donne en résultat un défaut du bus de données (19) de la ramification secondaire.

16. Procédé selon l'une des revendications 11 à 15,
**caractérisé en ce que** l'on vérifie régulièrement si l'un des capteurs optoélectroniques (11, 13, 15) est défectueux, et l'on génère un signal d'avertissement au cas où la vérification donne en résultat un défaut d'un capteur.

17. Procédé selon l'une des revendications 11 à 16 pour la détection et la poursuite de codes optiques (45, 47) sur des objets (41, 43) qui sont transportés le long d'une zone de surveillance (51), au moyen d'un système de détection selon l'une des revendications 3 à 5,
dans lequel on vérifie à l'aide du circuit de surveillance
- si, après la génération d'un signal de détection d'objet par le dispositif de déclenchement (25) situé en amont, à l'intérieur d'un intervalle temporel qui correspond à la distance intermédiaire prédéterminée (61) et à la vitesse de transport des objets (41, 43), un signal de détection d'objet est également généré par le dispositif de déclenchement (27) situé en aval, et
- si, avant la génération d'un signal de détection d'objet par le dispositif de déclenchement (27) situé en aval, à l'intérieur d'un intervalle temporel qui correspond à la distance intermédiaire prédéterminée (61) et à la vitesse de transport des objets (41, 43), un signal de détection d'objets a déjà été généré par le dispositif de déclenchement (25) situé en amont.

18. Procédé selon la revendication 17,
**caractérisé en ce que** le circuit de surveillance engendre un signal d'avertissement au cas où la vérification donne en résultat un défaut d'un dispositif de déclenchement (25, 27).
